# FASCICULE DE BREVET EUROPEEN

(11) **EP 4 284 639 B1**
(45) Date de publication et mention de la délivrance du brevet: **13.11.2024**
(21) Numéro de dépôt: 22706073.8
(22) Date de dépôt: 26.01.2022
(51) Int. Cl.: B32B 17/10, B60J 1/17, E05F 11/38

(54) **VITRAGE FEUILLETE COULISSANT A RETRAIT INTERIEUR ET PROCEDE DE FABRICATION DE CE VITRAGE**
SCHIEBEVERBUNDGLASSCHEIBE MIT INNENLIEGENDEM AUSGESPARTEM ABSCHNITT UND VERFAHREN ZUR HERSTELLUNG DIESER VERBUNDGLASSCHEIBE
SLIDING LAMINATED GLAZING HAVING AN INNER RECESSED PORTION AND PROCESS FOR MANUFACTURING SAID GLAZING

(30) Priorité: 27.01.2021 FR 2100742
(43) Date de publication de la demande: 06.12.2023
(73) Titulaire: Saint-Gobain Glass France, 92400 Courbevoie (FR)
(72) Inventeur: RAPENNE, Thibault, 60400 NOYON (FR); LE MOAL, Simon, 93500 PANTIN (FR); PELLETIER, Jérôme, 60130 CUIGNIERES (FR)
(74) Mandataire: Saint-Gobain Recherche
(86) Numéro de dépôt international: PCT/FR2022/050140
(87) Numéro de publication internationale: WO 2022/162309

(56) Documents cités:
- EP-A1- 0 418 123
- WO-A1-2020/044061
- CA-A1- 3 040 590
- FR-A1- 2 000 890

## Description

La présente invention se rapporte à un vitrage de véhicule, et notamment de véhicule automobile, comportant une vitre ainsi que des moyens pour permettre la mobilité de ladite vitre en translation verticale par rapport à une portière dudit véhicule, ladite vitre étant bombée et feuilletée et comprenant au moins une feuille de verre extérieure, une feuille de verre intérieure, ainsi qu'une feuille de matière adhésive située entre ladite feuille de verre extérieure et ladite feuille de verre intérieure, chaque feuille présentant un chant périphérique et une épaisseur.

La demande internationale de brevet N° WO 2013/04473 enseigne qu'il est possible de réaliser ce qu'il est convenu d'appeler un bombage à froid, ou « cold-bending » en anglais, d'une vitre feuilletée bombée en utilisant, pour l'opération de feuilletage, une feuille de verre épaisse bombée, une feuille de matière adhésive et une feuille de verre fine initialement plate ou peu bombée et dont l'épaisseur n'est pas supérieure au tiers l'épaisseur de la feuille de verre épaisse bombée.

La demande internationale de brevet N° WO 2014/029605 expose qu'une vitre présente généralement une ligne de vision réalisant, lorsque le vitrage est considéré verticalement, une séparation entre d'une part une partie cachée de la vitre qui est située sous ladite ligne de vision et qui est destinée à être cachée à l'intérieur de ladite portière quelle que soit la position de ladite vitre par rapport à ladite portière et d'autre part une partie visible de la vitre qui est située au-dessus de ladite ligne de vision et enseigne qu'il est important que les chants des trois feuilles de la vitre feuilletée soient dans la continuité latérale les uns des autres dans la partie visible de la vitre mais que la partie cachée peut contenir une zone où seule la feuille de verre extérieure épaisse est présente, la fixation du vitrage étant opérée dans cette zone.

L'art antérieur connaît en outre de la demande de brevet EP 3395777, un vitrage mobile feuilleté tel que le chant de la feuille de verre intérieure et le chant de la feuille de matière adhésive de la vitre sont situés en-deçà du chant de la feuille de verre extérieure afin de former un retrait intérieur présentant une largeur spécifique très réduite de l'ordre de 1 mm et de préférence encore moins.

CA3040590A1, divulgue un vitrage de véhicule, comportant une vitre ainsi que des moyens pour permettre la mobilité de ladite vitre en translation verticale par rapport à une portière dudit véhicule, ladite vitre étant bombée et feuilletée et comprenant au moins une feuille de verre extérieure, une feuille de verre intérieure, ainsi qu'une feuille de matière adhésive située entre ladite feuille de verre extérieure et ladite feuille de verre intérieure, chaque feuille présentant un chant périphérique, le chant de ladite feuille de verre intérieure étant situé au-delà du chant de ladite feuille de matière plastique et du chant de ladite feuille de verre extérieure sur une partie au moins de la longueur du chant de ladite feuille de verre intérieure afin de former un retrait extérieur, ladite vitre présentant une ligne de vision réalisant, lorsque le vitrage est considéré verticalement, une séparation entre d'une part une partie cachée de la vitre qui est située sous ladite ligne de vision et qui est destinée à être cachée à l'intérieur de ladite portière quelle que soit la position de ladite vitre par rapport à ladite portière et d'autre part une partie visible de la vitre qui est située au-dessus de ladite ligne de vision, caractérisé en ce que le chant de ladite feuille de verre intérieure et le chant de ladite feuille de matière adhésive sont tous les deux dans le prolongement latéral du chant de ladite feuille de verre extérieure dans au moins une zone cachée d'alignement, qui est située dans ladite partie cachée de la vitre, et ledit retrait extérieur présente une largeur comprise entre 2,0 mm et 30,0 mm et est présent dans la totalité de ladite partie visible de la vitre.

Dans la pratique, l'assemblage des trois feuilles pour former la vitre feuilletée peut être particulièrement compliqué lorsque la configuration de la vitre feuilletée finie est complexe. En effet, pour des courbures complexes, il est difficile d'obtenir que la feuille de verre intérieure mince suive à la fois parfaitement la courbe de la feuille de verre extérieure épaisse sur toute sa surface et à la fois que le pourtour de la feuille de verre intérieure mince suive parfaitement le pourtour de la feuille de verre extérieure épaisse.

Lors de l'opération de feuilletage, généralement réalisée en autoclave, il arrive parfois que, pour certaines vitres d'un lot, le pourtour de la feuille de verre intérieure mince soit décalé en direction centripète ou en direction centrifuge dans un coin, ou une zone, ou parfois même plusieurs zones, du pourtour de la feuille de verre extérieure épaisse. Les vitres comme cela ne présentent pas une périphérie ayant un aspect homogène et doivent être mises au rebus car elles sont refusées par le constructeur automobile.

Ce mésalignement local des chants peut en outre provoquer des zones de fragilité de la vitre feuilletée.

Un but de la présente invention est donc de proposer un agencement de vitrage feuilleté mobile pouvant à la fois être fabriqué correctement et rapidement et présentant une configuration esthétique acceptable, en particulier une périphérie ayant un aspect homogène dans la partie visible de la vitre.

L'invention repose sur la découverte que plutôt que de subir localement un retrait ou un débord de la feuille de verre intérieur, il était préférable de la concevoir et de la mettre en oeuvre par feuilletage de telle sorte qu'après le feuilletage, la vitre feuilletée présente volontaire un retrait intérieur, réduit, visible, mais homogène dans la partie visible de la vitre.

Toutefois, un tel retrait intérieur, s'il était complètement périphérique, complexifierait le positionnement des feuilles les unes par rapport aux autre avant le feuilletage et risquerait de dégrader la fiabilité de l'opération de feuilletage, alors l'invention repose en outre sur le fait de prévoir au moins une zone dans laquelle ce retrait est absent, et de prévoir que cette zone soit dans la partie cachée de la vitre, celle qui reste toujours cachée à l'intérieur du montant de la portière, quelle que soit la position de la vitre (ouverte ou fermée) par rapport à la portière.

En outre, la zone dans laquelle ce retrait est absent est une zone fragile de la vitre feuilletée mais en prévoyant que le retrait est absent spécifiquement dans une zone cachée de la vitre, cette zone fragile est en permanence protégée à l'intérieur du montant de la portière, quelle que soit la position du vitrage (ouvert ou fermé) par rapport à la portière.

La présente invention se rapporte ainsi dans son acception la plus large à un vitrage de véhicule selon la revendication 1. Ce vitrage comporte une vitre ainsi que des moyens pour permettre la mobilité de ladite vitre en translation verticale par rapport à une portière dudit véhicule, ladite vitre étant bombée et feuilletée et comprenant au moins une feuille de verre extérieure, une feuille de verre intérieure, ainsi qu'une feuille de matière adhésive située entre ladite feuille de verre extérieure et ladite feuille de verre intérieure, chaque feuille présentant un chant périphérique, le chant de ladite feuille de verre intérieure et le chant de ladite feuille de matière adhésive étant situés en-deçà du chant de ladite feuille de verre extérieure afin de former un retrait intérieur présentant une largeur, ladite vitre présentant une ligne de vision réalisant, lorsque le vitrage est considéré verticalement, une séparation entre d'une part une partie cachée de la vitre qui est située sous ladite ligne de vision et qui est destinée à être cachée à l'intérieur de ladite portière quelle que soit la position de ladite vitre par rapport à ladite portière et d'autre part une partie visible de la vitre qui est située au-dessus de ladite ligne de vision, ledit vitrage étant remarquable en ce que :
- le chant de ladite feuille de verre intérieure et le chant de ladite feuille de matière adhésive sont tous les deux dans le prolongement latéral du chant de ladite feuille de verre extérieure dans au moins une zone cachée d'alignement, voire dans plusieurs zones cachées d'alignement, qui est, ou qui sont chacune, située(s) dans ladite partie cachée de la vitre, et
- ledit retrait intérieur présente une largeur comprise entre 0,8 mm et 5,0 mm, et de préférence comprise entre 1,0 mm et 4,0 mm, voire comprise entre 1,2 mm et 3,8 mm, et est présent dans la totalité de ladite partie visible de la vitre.

Le retrait est appelé « retrait intérieur » car il s'agit de réaliser la feuille de verre intérieure plus petite que la feuille de verre extérieure ; autrement dit, seule la feuille de verre extérieure est entièrement aux dimensions nominales (dimensions de la baie à fermer).

La largeur du retrait intérieur est la distance entre un plan normal au bord de la feuille de verre extérieure et un plan normal au bord de la feuille de verre intérieure.

Pour faciliter la mise en oeuvre du feuilletage, il est préférable que le retrait intérieur de la feuille de verre intérieure soit appliqué de manière identique à la feuille de matière adhésive située entre les deux feuilles de verre.

Lesdits moyens pour permettre la mobilité de ladite vitre peuvent comprendre, au sens de la présente invention, un ou plusieurs trous traversant partiellement ou totalement ladite vitre (c'est-à-dire sur une partie de l'épaisseur d'un élément la composant ou la totalité de l'épaisseur de cet élément ou sur une partie de l'épaisseur de la vitre comprenant à cet endroit plusieurs éléments, voir sur la totalité de l'épaisseur de la vitre), une ou plusieurs gouttières d'attache (« holder » en anglais), un ou plusieurs rails, ou coulisses.

Ledit retrait intérieur s'étend en outre, de préférence, dans ladite partie cachée de la vitre, sur une hauteur d'au moins 5,0 mm, et de préférence sur une hauteur d'au moins 10,0 mm, sous ladite ligne de vision, afin d'assurer que le retrait présente une apparence homogène même légèrement au-delà de la zone où il est visible.

Ledit retrait intérieur est, de préférence, présent le long de la totalité d'un premier bord latéral, d'un bord haut et d'un second bord latéral de la vitre.

Ledit retrait intérieur présente une largeur qui est, de préférence, constante le long de la partie visible d'un premier bord latéral de la vitre et/ou le long de la partie visible d'un bord haut de la vitre et/ou le long de la partie visible d'un second bord latéral de la vitre, et de préférence ledit retrait intérieur présente une largeur constante le long de la totalité de sa longueur dans ladite partie visible de la vitre.

Ledit retrait intérieur est destiné à être guidé dans un élément de guidage et d'étanchéité fixé audit véhicule.

Ladite feuille de verre extérieure et ladite feuille de verre intérieure sont, de préférence, telles que l'épaisseur de ladite feuille de verre intérieure est inférieure à l'épaisseur de ladite feuille de verre extérieure.

Dans une variante, le chant de ladite feuille de verre intérieure est situé en deçà du chant de ladite feuille de verre extérieure :
- sur une partie au moins de, voire toute, la longueur dudit premier bord latéral et/ou,
- sur une partie au moins de, voire toute, la longueur dudit second bord latéral de ladite vitre, et/ou
- sur une partie au moins de, voire toute, la longueur dudit bord haut de la vitre,
- sans être situé en deçà du chant de ladite feuille de verre extérieure sur une partie au moins de, voire toute, la longueur dudit bord bas de la vitre.

Ainsi, la vitre est plus facile à fabriquer car la (ou les) partie(s) du chant de ladite feuille de verre intérieure qui ne s'étend(ent) pas au-delà du chant de ladite feuille de matière adhésive et du chant de ladite feuille de verre extérieure peut(peuvent) être telle(s) que le chant de ladite feuille de verre intérieure est alors dans la continuité du chant de la feuille de matière adhésive et du chant de la feuille de verre extérieure ; cette(ces) partie(s) peut(peuvent) alors servir de zone(s) de référence pour le positionnement de la feuille de verre intérieure et de la feuille de matière adhésive par rapport à la feuille de verre intérieure bombée lors de la fabrication de la vitre (c'est-à-dire lors du feuilletage).

Dans une variante, ladite zone cachée d'alignement est constituée d'un seul tenant tout le long d'un bord bas de ladite vitre. Ainsi, tout le bord bas de la feuille de verre intérieure peut servir de référence pour une (ou plusieurs) butée(s) de référence pour le positionnement de la feuille de verre intérieure et de la feuille de matière adhésive préalablement au feuilletage. En particulier, avec trois zones de référence dans la zone cachée d'alignement, le référencement de l'alignement est particulièrement fiable.

Dans une autre variante, un bord bas de ladite vitre comporte trois zones cachées d'alignement et deux zones de fixation non feuilletées, chaque zone de fixation non feuilletée étant intercalée entre deux zones cachées d'alignement successives. Ainsi, trois zones cachées d'alignement peuvent servir de référence pour des butées de référence pour le positionnement de la feuille de verre intérieure et de la feuille de matière adhésive préalablement au feuilletage. Ainsi, la vitre peut être fixée grâce aux zones de fixation dans lesquels seuls la feuille de verre extérieure est présente ; ce qui simplifie la fixation. En outre, avec trois zones cachées d'alignement, le référencement de l'alignement est particulièrement fiable.

La vitre est une vitre feuilletée dans le sens où il n'y a pas d'espace gazeux ou d'espace vide entre les feuilles qui constituent la vitre.

Avantageusement, l'épaisseur de ladite feuille de verre extérieure est comprise entre 2,85 mm et 4,85 mm.

Avantageusement, l'épaisseur de ladite feuille de verre intérieure est comprise entre 0,30 mm et 2,60 mm.

Dans un mode préféré de réalisation de la présente invention, l'épaisseur de ladite feuille de verre intérieure est comprise 1,00 mm et 1,20 mm.

Avantageusement, ladite feuille de verre intérieure présente des contraintes de surface au maximum de 20 MPa, de 30 MPa et de 40 MPa respectivement pour une épaisseur de ladite feuille de verre intérieure d'environ 1,1 mm, d'environ 1,6 mm et d'environ 2,1 mm. Le terme « environ » désigne ici une valeur considérée par l'homme du métier comme une valeur standard, même si localement cette valeur peut varier dans une fourchette de plus ou moins 10 %.

La présente invention se rapporte par ailleurs à un procédé de fabrication d'un vitrage de véhicule, ledit vitrage comportant une vitre ainsi que des moyens pour permettre la mobilité de ladite vitre en translation verticale par rapport à une portière dudit véhicule, ladite vitre étant bombée et feuilletée et comprenant au moins une feuille de verre extérieure, une feuille de verre intérieure, ainsi qu'une feuille de matière adhésive située entre ladite feuille de verre extérieure et ladite feuille de verre intérieure, chaque feuille présentant un chant périphérique, le chant de ladite feuille de verre intérieure et le chant de ladite feuille de matière adhésive étant situés en-deçà du chant de ladite feuille de verre extérieure afin de former un retrait intérieur présentant une largeur, ladite vitre présentant une ligne de vision réalisant, lorsque le vitrage est considéré verticalement, une séparation entre d'une part une partie cachée de la vitre qui est située sous ladite ligne de vision et qui est destinée à être cachée à l'intérieur de ladite portière quelle que soit la position de ladite vitre par rapport à ladite portière et d'autre part une partie visible de la vitre qui est située au-dessus de ladite ligne de vision ; ledit procédé étant remarquable en ce que :
- pour l'opération de fabrication de ladite vitre par feuilletage, le chant de ladite feuille de verre intérieure et le chant de ladite feuille de matière adhésive sont tous les deux positionnés dans le prolongement latéral du chant de ladite feuille de verre extérieure dans au moins une zone cachée d'alignement, voire dans plusieurs zones cachées d'alignement, qui est, ou qui sont chacune, située(s) dans ladite partie cachée de la vitre, et le chant de ladite feuille de verre intérieure et le chant de ladite feuille de matière adhésive sont tous les deux positionnés de telle sorte que
- après feuilletage, ledit retrait intérieur présente une largeur comprise entre 0,8 mm et 5,0 mm, et de préférence comprise entre 1,0 mm et 4,0 mm, voire comprise entre 1,2 mm et 3,8 mm, et est présent dans la totalité de ladite partie visible de la vitre.

Dans le présent document, pour les plages mentionnées les bornes des plages sont incluses dans les plages.

Le « chant », ou « rive », désigne le côté étroit d'une feuille, qui est situé sensiblement transversalement entre les deux faces principales d'une feuille. Le « prolongement latéral » d'un chant est considéré selon cette direction transversale entre les faces principales d'une feuille.

Ainsi, la vitre est plus facile à fabriquer car la (ou les) partie(s) du chant de ladite feuille de verre intérieure et du chant de ladite feuille de matière adhésive ne s'étend(ent) pas en deçà du chant de ladite feuille de verre extérieure peut(peuvent) être telle(s) que le chant de ladite feuille de verre intérieure est alors dans la continuité du chant de ladite feuille de matière adhésive et du chant de ladite feuille de verre extérieure ; cette(ces) partie(s) peut(peuvent) alors servir de partie(s) de référence pour le positionnement de la feuille de verre intérieure et de la feuille de matière adhésive par rapport à la feuille de verre extérieure lors de la fabrication de la vitre (c'est-à-dire lors du feuilletage).

En outre, cette(ces) partie(s) peut(peuvent) être située(s) en vis-à-vis des moyens permettant la mobilité de ladite vitre en translation par rapport à la portière dudit véhicule (c'est-à-dire le ou les porte-vitre) afin d'augmenter la tenue mécanique de la vitre à cet endroit.

La présente invention a été développée pour les vitrages incorporés dans des portières présentant des montants latéraux et un montant supérieur au niveau du vitrage lorsque celui-ci est remonté (fermé).

Avantageusement surtout, la présente invention permet de réaliser un vitrage avec un débord intérieur unique qui sera visible par un utilisateur du véhicule, sans toutefois qu'il soit vraiment remarqué car discret et de préférence constant dans toute la partie visible de la vitre.

La présente invention sera mieux comprise à la lecture de la description détaillée ci-après d'exemples de réalisation non limitatifs et des figures ci-jointes :
[Fig. 1] illustre une vue de face intérieure d'un vitrage avant mobile de véhicule selon un mode de réalisation de l'invention à retrait intérieur partiellement périphérique et avec des porte-vitres ;
[Fig. 2] illustre une vue de face intérieure d'un autre vitrage avant mobile de véhicule selon un autre mode de réalisation de l'invention à retrait intérieur partiellement périphérique et sans porte-vitre ;
[Fig. 3] illustre une vue partielle en coupe d'un porte-vitre de la figure 1 ; et
[Fig. 4] illustre une vue partielle en coupe d'un montant latéral de portière avec une vitre selon l'invention en position fermée.

Il est précisé que les proportions entre les divers éléments représentés dans les figures ne sont pas rigoureusement respectées afin d'en faciliter la lecture.

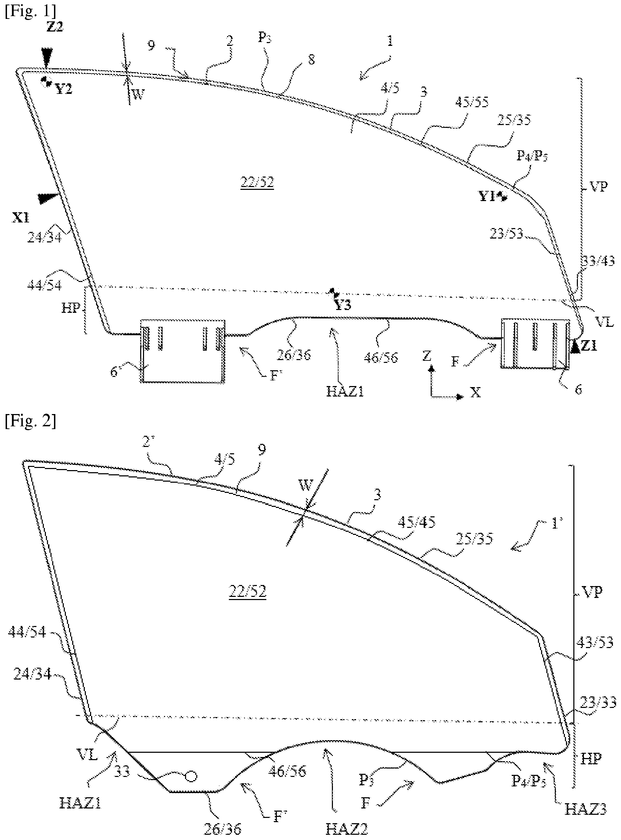

Les figures 1 et 2 illustrent un vitrage 1, 1' latéral gauche d'un véhicule, selon un mode de réalisation de l'invention, considéré comme étant vu de l'intérieur de ce véhicule.

Il s'agit en particulier d'un vitrage latéral d'une portière d'un véhicule automobile (non visible en figures 1 et 2) qui est mobile entre translation par rapport à cette portière sensiblement selon la verticale entre une position ouverte dans laquelle le vitrage se situe en totalité ou en quasi-totalité à l'intérieur de la portière et une position fermée dans laquelle le vitrage ferme une baie de la porte.

Ce vitrage réalise ainsi en position fermée une séparation verticale entre un espace intérieur I qui est à l'intérieur du véhicule et un espace extérieur E qui est à l'extérieur du véhicule.

Les notions de « extérieur » et « intérieur » sont donc considérées dans le présent document respectivement par rapport à cet espace extérieur E et cet espace intérieur I.

Comme il s'agit d'un vitrage latéral, celui-ci s'étend pour l'essentiel selon l'axe généralement appelé « l'axe X » du véhicule, qui est l'axe longitudinal central d'avancé du véhicule équipé du vitrage selon l'invention en tant que vitrage latéral du côté gauche du véhicule et qui correspond à l'axe horizontal dans le plan de la feuille en figures 1 et 2.

Dans le cadre du présent document, la notion de « centripète » et celle de « centrifuge » est à considérer dans le plan de la feuille en figure 1 ou 2, ou dans un plan général du vitrage lorsqu'il est considéré à plat, exprimé par rapport au centre du vitrage, selon les axes X et Z ; le sens centripète est en direction de ce centre du vitrage alors que le sens centrifuge s'éloigne de ce centre du vitrage.

La mobilité du vitrage par rapport à la portière est essentiellement verticale dans le sens où cette mobilité s'opère selon l'axe Z, avec éventuellement une petite composante selon l'axe transversal Y non représenté en figures 1 et 2.

Dans les modes de réalisation des figures 1 et 2, le vitrage 1, 1' est d'un seul tenant.

Dans les exemples de réalisation illustrés, le vitrage 1, 1' comporte une vitre 2, 2' qui est bombée (c'est-à-dire non plate) et feuilletée. Toutefois, pour plus de simplicité, il est considéré dans les figures que la vitre 2, 2' est plate.

La vitre 2, 2' du vitrage 1, 1' est une vitre feuilletée qui comporte, de l'extérieur vers l'intérieur, au moins, dans cet ordre : une feuille de verre extérieure 3, une feuille intercalaire de matière adhésive 4 puis une feuille de verre intérieure 5 ; toutefois, il est possible qu'au moins une autre feuille soit intercalée entre la feuille de verre extérieure 3 et la feuille intercalaire de matière adhésive 4 ou entre la feuille intercalaire de matière adhésive 4 et feuille de verre intérieure 5. La feuille intercalaire de matière adhésive 4 et la feuille de verre extérieure 3 sont vues par transparence à travers la feuille de verre intérieure 5 en figures 1 et 2. En variante, la vitre 2, 2' peut être constituée de la feuille de verre extérieure 3, de la feuille intercalaire de matière adhésive 4 et de la feuille de verre intérieure 5, sans aucune autre feuille.

En outre, la vitre 2, 2' présente un premier bord latéral 23, un second bord latéral 24, un bord haut 25 et un bord bas 26. Le premier bord latéral 23 et le second bord latéral 24 de la vitre sont disposés respectivement dans la partie de la vitre orientée vers l'avant et dans la partie de la vitre orientée vers l'arrière du véhicule. Le bord haut 25 et le bord bas 26 de la vitre sont disposés respectivement dans la partie de la vitre orientée vers le toit et dans la partie de la vitre orientée vers le sol sur lequel repose le véhicule.

La feuille de verre extérieure 3 présente une face extérieure 30 qui est orientée vers l'espace extérieur E, une face intercalaire 32 qui est orientée vers la feuille intercalaire de matière adhésive 4, et un chant 31 périphérique situé entre ces deux faces. En outre, la feuille de verre extérieure 3 présente un premier bord latéral 33, un second bord latéral 34, un bord haut 35 et un bord bas 36. Le premier bord latéral 33 et le second bord latéral 34 de la feuille de verre extérieure 3 sont disposés respectivement dans la partie de la feuille de verre extérieure 3 orientée vers l'avant et dans la partie de la feuille de verre extérieure 3 orientée vers l'arrière du véhicule. Le bord haut 35 et le bord bas 36 de la feuille de verre extérieure 3 sont disposés respectivement dans la partie de la feuille de verre extérieure 3 orientée vers le toit et dans la partie de la feuille de verre extérieure 3 orientée vers le châssis du véhicule.

La feuille de verre intérieure 5 présente une face intercalaire 50 qui est orientée vers la feuille intercalaire de matière adhésive 4, une face intérieure 52 qui est orientée vers l'espace intérieur I et un chant 51 périphérique situé entre ces deux faces. En outre, la feuille de verre intérieure 5 présente un premier bord latéral 53, un second bord latéral 54, un bord haut 55 et un bord bas 56. Le premier bord latéral 53 et le second bord latéral 54 de la feuille de verre intérieure 5 sont disposés respectivement dans la partie de la feuille de verre intérieure 5 orientée vers l'avant et dans la partie de la feuille de verre intérieure 5 orientée vers l'arrière du véhicule. Le bord haut 55 et le bord bas 56 de la feuille de verre intérieure 5 sont disposés respectivement dans la partie de la feuille de verre intérieure 5 orientée vers le toit et dans la partie de la feuille de verre intérieure 5 orientée vers le châssis du véhicule.

La feuille intercalaire de matière adhésive 4 présente une face intercalaire extérieure 40 qui est orientée vers la face intercalaire 32 et qui est ici au contact de cette face intercalaire 32, une face intercalaire intérieure 42 qui est orientée vers la face intercalaire 50 et qui est ici au contact de cette face intercalaire 50, ainsi qu'un chant 41 périphérique qui est situé entre ces deux faces intercalaires 40, 42. En outre, la feuille intercalaire de matière adhésive 4 présente un premier bord latéral 43, un second bord latéral 44, un bord haut 45 et un bord bas 46. Le premier bord latéral 43 et le second bord latéral 44 de la feuille intercalaire de matière adhésive 4 sont disposés respectivement dans la partie de la feuille intercalaire de matière adhésive 4 orientée vers l'avant et dans la partie de la feuille intercalaire de matière adhésive 4 orientée vers l'arrière du véhicule. Le bord haut 45 et le bord bas 46 de la feuille intercalaire de matière adhésive 4 sont disposés respectivement dans la partie de la feuille intercalaire de matière adhésive 4 orientée vers le toit et dans la partie de la feuille intercalaire de matière adhésive 4 orientée vers le châssis du véhicule.

La feuille de verre extérieure 3 est une feuille de verre ayant subi une opération de bombage thermique avant la fabrication de la vitre 2, 2' feuilletée et présentant une épaisseur es comprise entre 2,85 et 4,85 mm, par exemple de 3,50 mm. La feuille de verre extérieure 3 peut présenter des contraintes de surface d'au moins 80 MPa tout en étant inférieures à 200 MPa.

La feuille de verre intérieure 5 peut être une feuille de verre ayant subi une opération de trempe thermique, ou de semi-trempe, et présentant une épaisseur es comprise 0,70 et 2,60 mm, voire comprise 0,70 et 2,50 mm, voire entre 0,70 et 2,30 mm, voire entre 0,70 et 2,10 mm, par exemple de 1,10 mm ou 1,60 mm. Les opérations de trempe ou semi-trempe ont pour avantage d'être très rapides à réaliser. En effet, en moyenne, il est possible de produire environ 20 feuilles de verre en une minute. Par ailleurs, l'opération de trempe, ou de semi-trempe, permet d'introduire des contraintes de surface de l'ordre de 20 MPa, 30 MPa et 40 MPa respectivement sur une feuille de verre ayant une épaisseur d'environ 1,10 mm, d'environ 1,60 mm et d'environ 2,10 mm.

En variante, la feuille de verre intérieure 5 peut être une feuille de verre ayant subi une opération de trempe chimique et présentant une épaisseur es comprise 0,30 et 1,60 mm, voire comprise 0,50 et 1,50 mm, voire entre 0,70 et 1,20 mm, par exemple de 1,10 mm. Une opération de trempe chimique permet d'introduire des contraintes de surface d'au moins de 200 MPa.

La feuille de matière adhésive 4 intercalaire est par exemple une feuille en polyvinylbutyral (PVB) présentant une épaisseur e₄ comprise entre 0,30 et 1,50 mm, par exemple de 0,78 mm. Cette feuille de matière adhésive 4 présente de préférence les mêmes dimensions de longueur selon l'axe X et de hauteur selon l'axe Z, que la feuille de verre intérieure 5.

Dans le cas où la vitre 2, 2' comporte une ou plusieurs autre(s) feuille(s) en plus des trois mentionnées précédemment, la feuille de verre extérieure 3 est la feuille de la vitre feuilletée qui est la plus à l'extérieur.

Dans une variante, la feuille de verre intérieure 5 n'est pas bombée avant la fabrication de la vitre 2, 2' feuilletée ; c'est ce feuilletage qui va lui donner sa forme bombée, en suivant la forme de la feuille de verre extérieure 3. Cela est rendu possible grâce à la faible épaisseur de la feuille de verre intérieure 5 relativement à celle de la feuille de verre extérieure 3.

Dans une autre variante, la feuille de verre intérieure 5 est bombée selon la forme finale de la vitre 2, 2' avant la fabrication de la vitre 2 feuilletée.

Dans une variante intermédiaire, la feuille de verre intérieure 5 est bombée avant la fabrication de la vitre 2, 2' feuilletée selon une forme plus plate que celle qu'elle aura au final dans la vitre 2, 2' feuilletée terminée.

Les figures 1 et 2 montrent que la vitre 2, 2' présente une face extérieure 20 qui est réalisée par la face extérieure 30 de la feuille de verre extérieure 3, une face intérieure 22 qui est réalisée par la face intérieure 52 de la feuille de verre intérieure 5 et un chant 21 périphérique situé entre ces deux faces, correspondant au chant 31 périphérique de la feuille de verre extérieure 3, au chant 41 périphérique de la feuille de matière adhésive 4 et au chant 51 périphérique de la feuille de verre intérieure 5.

En figures 1 et 2, le trait discontinu appelé « ligne de vision » ou « limite de vision » VL matérialise le haut du caisson de la portière à l'intérieur duquel le vitrage 1, 1' coulisse. Cette ligne de vision VL réalise, lorsque le vitrage est considéré verticalement, une séparation entre d'une part une partie cachée de la vitre HP qui est située sous la ligne de vision VL et qui est destinée à être cachée à l'intérieur de la portière quelle que soit la position de la vitre par rapport à ladite portière et d'autre part une partie visible de la vitre VP qui est située au-dessus de la ligne de vision VL.

Dans la partie cachée du vitrage, sous la ligne LV, le vitrage 1, 1' présente une et de préférence ici deux, zones de fixation F, F' dans chacune desquelles un porte-vitre 6 est fixé à la vitre 2, 2' (seuls les porte-vitre de la vitre de la figure 1 sont illustrés).

Le vitrage 1, 1' des figures 1 et 2 comporte ainsi, outre la vitre 2, 2', le long d'au moins une partie d'au moins un bord bas 26, au moins un porte-vitre qui est destiné à permettre d'accueillir un élément d'attachement, non représenté, qui a pour but de permettre d'attacher le porte-vitre dans un système de déplacement pour lever et baisser le vitrage. Certains documents parlent à ce sujet d'un système « de régulateur ».

Le vitrage 1, 1', dans sa configuration d'utilisation, comporte ainsi de préférence deux porte-vitre.

Dans la variante de la figure 1, les moyens pour permettre la mobilité de la vitre 2 en translation par rapport à une portière du véhicule comprennent au moins un et de préférence au moins deux porte-vitre 6, 6' présentant par exemple en coupe transversale sensiblement une forme en h inversé.

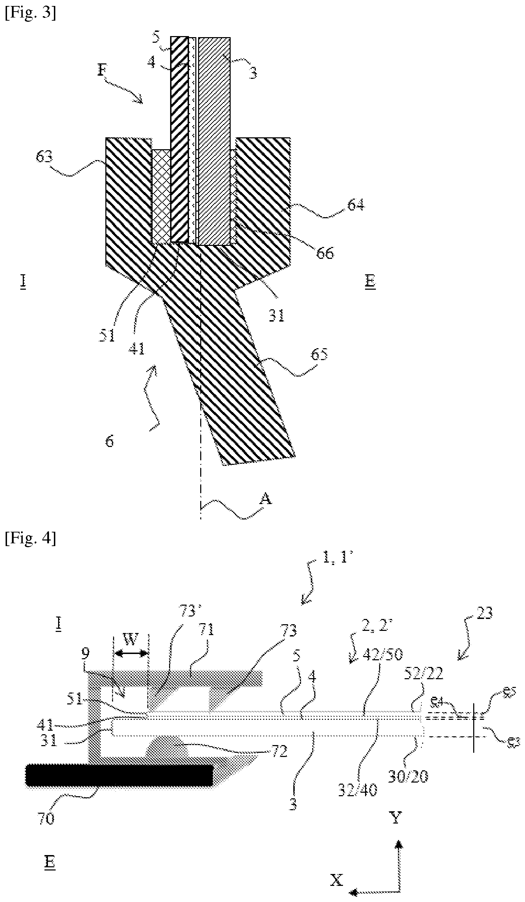

La figure 3 illustre une vue de détail d'un tel porte-vitre 6 pour une vitre avec un retrait intérieur complètement absent dans la zone de fixation F. Ce porte-vitre 6 présente ainsi :
- une première partie constituée de deux parois parallèles 63, 64 reliées à leur base et formant une rainure longitudinale, c'est-à-dire formant en coupe transversale une forme en U, et
- une deuxième partie constituée d'une queue 65 s'étendant à l'opposé des parois parallèles 63, 64 par rapport à la base reliant ces parois.

Dans la rainure longitudinale du porte-vitre 6, 6', le chant 51 de la feuille de verre intérieure et le chant 41 de ladite feuille de matière adhésive sont tous les deux dans le prolongement latéral du chant 31 de ladite feuille de verre extérieure.

Dans la version illustrée, l'assemblage est opéré de manière à ce que lesdites parois parallèles 63, 64 de ladite forme en h enchâssent la vitre 2 dans sa partie inférieure, la queue 65 se trouvant alors sensiblement dans le prolongement de la vitre 2.

Cette forme en h du porte-vitre est particulièrement avantageuse car elle permet la transmission des efforts entre le porte-vitre et la vitre selon une grande surface correspondant à la somme des surfaces intérieures des parois parallèles 63, 64 ; toutefois, il est tout à fait possible d'utiliser une simple platine, cette platine présentant par exemple au moins deux parties : une première partie pour la coopération avec la vitre et une deuxième partie pour la coopération avec le mécanisme d'entraînement (monté/descente) de la vitre.

Sur la figure 3, la vitre 2 est illustrée plate et les parois parallèles 63, 64 et la queue 65 sont planes mais la vitre 2 est bombée et les parois parallèles 63, 64 et/ou la queue 65 peuvent être bombées. La queue 65 s'étend environ à partir de la moitié de la base reliant les parois parallèles 63, 64, mais il est également possible de positionner la queue 65 dans le prolongement de l'une ou de l'autre des parois parallèles 63, 64.

Sur la figure 3 la queue 65 n'est pas parallèle aux parois 63, 64. L'axe A illustrant le plan moyen du vitrage 1 à son extrémité inférieure lorsque ce dernier est correctement positionné vis-à-vis du porte-vitre 6, la queue 65 est orientée d'un angle non nul vis-à-vis de l'axe T et qui est fonction du bombage de la vitre 2.

La queue 65 est destinée à être reliée à un système d'entraînement motorisé non illustré pour permettre la montée et la descente du vitrage 1 dans la portière du véhicule.

L'assemblage des porte-vitre 6, 6' à la vitre 2 feuilletée est opéré sur un gabarit permettant le contrôle des tolérances sur l'ensemble porte-vitre 6, 6' / vitre 2.

Avant le positionnement et la fixation des porte-vitre, la vitre 2 est d'abord correctement positionnée (« focalisée ») dans un gabarit de montage présentant une pluralité de butées de positionnement.

L'une des butées de positionnement est désignée sous l'appellation point Y3 et est, de préférence, positionné sur la ligne de vision VL illustrant la position d'un joint de contact bas avec la portière lorsque le vitrage est fermé.

Le (ou les) porte-vitre 6, 6' est (ou sont) encollés(s) à l'aide d'une colle par exemple de polyuréthanne, puis « chaussé(s) » sur la vitre 2, c'est-à-dire qu'il(s) est (ou sont) positionné(s) de manière à ce que la vitre soit présente dans la forme en U, en butée ou non, en insérant entre lesdites parois parallèles 63, 64 et la vitre 2 une matière d'insertion 66 en plastique, comme par exemple du polypropylène.

Dans une variante, il est proposé une injection in-situ de matière adhésive destinée à former la matière d'insertion 66, qui est en résine thermofusible thermoplastique, par exemple à base de polyamide.

Le positionnement de la matière d'insertion 66 lorsque la vitre et les porte-vitre sont correctement positionnés les uns par rapport aux autres garantit ainsi la position du porte-vitre, quel que soit le galbe de la vitre.

La résine thermofusible utilisée présente une limite d'élasticité d'environ 5,5 N/mm² et une résistance à la rupture de 11 N/mm², calculées selon la norme DIN 53455. Elle doit être utilisée à une température d'environ 220 °C et présente à cette température une viscosité de l'ordre de 5000 mPa.s, mesurée selon la norme ASTM D 3236.

Les porte-vitre utilisés sont, de préférence, en alliage d'aluminium. A titre d'exemple, avec un alliage d'aluminium de nuance 6060 (AGS), une force de pressage verticale de 30 à 50 tonnes est suffisante, c'est-à-dire rapporté à la taille des porte-vitre, des efforts d'environ 150 GPa pour des porte-vitre en h de dimension hors-tout d'environ 40x30 mm et d'environ 450 GPa pour des porte-vitre en h de dimension hors-tout d'environ 60x60 mm.

Dans la variante de la figure 2, dans les deux zones de fixation F, F', la vitre 2' n'est pas feuilletée : les trois éléments constituant a minima le feuilletage ne sont pas tous présents sur toute la surface de la zone de fixation F, F', comme détaillé plus loin.

Deux modes de fixation sont combinés ici :
- à l'avant, la zone de fixation F ne comporte aucun trou et le porte-vitre ne présente en conséquence aucun trou, et
- à l'arrière, la zone de fixation F' présente un trou de fixation 33 ; le porte-vitre présente ainsi aussi un trou de fixation.

Bien que cela ne soit pas illustré, il est tout à fait possible que les deux zones de fixation F, F' du vitrage 1' de la figure 2 comporte un trou ou que les deux zones de fixation F, F' du vitrage 1' ne comporte aucun trou.

Dans la version illustrée en figure 2, le bord bas 56 de la feuille de verre intérieure 5, ainsi que le bord bas 46 de la feuille adhésive de matière adhésive 4 sont beaucoup plus haut que le bord bas 36 de la feuille de verre extérieure 3. Le bord bas 56 de la feuille de verre intérieure 5 et le bord bas 46 sont situés environ à mi-distance, selon la verticale entre la ligne de vision VL et le bord bas 36 de la feuille de verre extérieure 3.

Dans la version illustrée en figure 2, dans la zone de fixation F', la feuille extérieure 3 comporte un trou 33, tubulaire, débouchant sur les deux faces de la feuille extérieure 3, la face extérieure 30 et la face intérieure 32. Ce trou 33 présente un axe et présente une section interne circulaire ; il ne débouche pas sur le chant 31 de la feuille extérieure 3 : il est complètement de section circulaire et ce n'est pas une encoche.

Dans les deux zones de fixation F, F', la feuille de matière adhésive 4 et la feuille de verre intérieure 5 sont absentes ; seule la feuille de verre extérieure 3 est présente.

Selon l'invention, le chant 51 de la feuille de verre intérieure 5 et le chant 41 de la feuille de matière adhésive 4 sont situés en-deçà du chant 31 de ladite feuille de verre extérieure 3 afin de former un retrait intérieur 9 présentant une largeur W s'étendant en direction centripète, et ce retrait intérieur est particulier car il n'est pas complètement périphérique ; il ne s'étend pas le long de la totalité de la périphérie de la vitre : dans au moins une zone cachée d'alignement HAZ1, HAZ2, HAZ3, il n'y a pas de retrait intérieur et le chant 51 de ladite feuille de verre intérieure 5 et le chant 41 de ladite feuille de matière adhésive 4 sont tous les deux dans le prolongement latéral du chant 31 de la feuille de verre extérieure 3 ; cette zone cachée d'alignement est située dans la partie cachée de la vitre HP de telle sorte qu'elle reste en permanence cachée à l'intérieur du caisson de la portière, quelle que soit la position du vitrage par rapport à cette portière (vitrage ouvert ou fermé ou en position intermédiaire entre les deux).

Ce retrait intérieur 9 est unique dans la partie visible de la vitre VP et présente une largeur W relativement étroite et comprise entre 0,8 mm et 5,0 mm, et de préférence comprise entre 1,0 mm et 4,0 mm, voire comprise entre 1,2 mm et 3,8 mm, et est présent dans la totalité de ladite partie visible de la vitre VP.

Ce retrait intérieur 9 peut ne pas s'étendre jusqu'au bas du premier bord latéral 23 et/ou du second bord latéral 24 mais il s'étend dans la partie visible de la vitre, au moins jusqu'à la ligne de vision VL et s'étend de préférence, à partir de cette ligne de vision VL, dans la partie cachée de la vitre HP, sur une hauteur d'au moins 5,0 mm, et de préférence sur une hauteur d'au moins 10,0 mm, vers le bas, sous la ligne de vision VL. Il est donc possible de réaliser une zone cachée d'alignement dans le bas du premier bord latéral 23 et/ou dans le bas du second bord latéral 24, en particulier pour permettre de réaliser un référencement selon l'axe X seul.

Dans les figures 1 et 2, ledit retrait intérieur 9 est présent le long de la totalité du premier bord latéral 23, de la totalité du bord haut 25 et de la totalité du second bord latéral 24 de la vitre. La ou les zone(s) cachée(s) d'alignement sont donc située le long du bord bas 26 de la vitre 2 ou au coin entre d'une part le premier bord latéral 23 et le bord bas 26 et/ou d'autre part le second bord latéral 24 et le bord bas 26.

Dans la variante de la figure 1, il n'y a qu'une seule zone cachée d'alignement HAZ1 et elle est constituée tout le long du bord bas 26 de la vitre 2. Cela signifie qu'un (ou plusieurs) repère(s) de positionnement de la feuille de matière adhésive 4 et de la feuille de verre intérieure 5 peut (ou peuvent) être pris le long du bord bas 26 pour le positionnement correct de ces feuilles, selon au moins l'axe Z, avant le feuilletage.

Dans la variante de la figure 2, il y a trois zones cachées d'alignement HAZ1, HAZ2, HAZ3 qui sont réparties le long du bord bas 26 de la vitre 2' :
- une zone cachée d'alignement HAZ1 à l'arrière, près du coin entre le premier bord latéral 23 et le bord bas 26,
- une zone cachée d'alignement HAZ3 à l'avant, près du coin entre le second bord latéral 24 et le bord bas 26, et
- une zone cachée d'alignement HAZ2 centrale, située à peu près au milieu du bord bas 26.

Ainsi, chaque zone de fixation F, F' non feuilletée est intercalée entre deux zones cachées d'alignement successives, respectivement :
- entre la zone cachée d'alignement HAZ2 et la zone cachée d'alignement HAZ3, et
- entre la zone cachée d'alignement HAZ1 et la zone cachée d'alignement HAZ2.

Les trois zones cachées d'alignement HAZ1, HAZ2, HAZ3 en figure 2 permettent chacune de réaliser un repère de positionnement de la feuille de matière adhésive 4 et de la feuille de verre intérieure 5 par rapport à la feuille de verre extérieure 3 selon au moins l'axe Z, avant le feuilletage.

Bien que cela ne soit pas illustré, il est possible de prévoir deux zones cachées d'alignement et une ou deux zone(s) de fixation ; ou encore de prévoir quatre zones cachées d'alignement.

Le retrait intérieur 9 présente une largeur W qui peut être constante le long de la partie visible du premier bord latéral 23 de la vitre et/ou le long de la partie visible du bord haut 25 de la vitre et/ou le long de la partie visible du second bord latéral 24 de la vitre ; toutefois, il est préférable que le retrait intérieur 9 présente une largeur W constante le long de la totalité de sa longueur dans ladite partie visible de la vitre VP. Il n'est pas nécessaire qu'il présente la même largeur W dans la partie cachée de la vitre HP s'il est présent dans cette partie cachée de la vitre HP.

La largeur W du retrait intérieur 9, mesurée sur la vitre feuilletée finie, est obtenue avec une grande précision grâce au fait que préalablement au feuilletage :
- la feuille de verre extérieure est d'abord correctement positionnée (« focalisée ») dans un gabarit de montage présentant une pluralité de butées de positionnement, comme par exemple les butées X1, Y1, Y2, Z1, Z2, puis
- la feuille de matière adhésive 4 et la feuille de verre intérieure 5 sont correctement positionnée dans le même gabarit de montage à l'aide des même butées de positionnement.

Au moins une butée, ici la butée Z1 en figure 1, est située dans une zone cachée d'alignement.

Ainsi, d'une manière générale, toute la partie du vitrage qui est située sous la limite de vision VL peut ne pas comporter de retrait intérieur : dans cette partie sous la limite de vision VL, à l'intérieur du caisson de la portière lorsque le vitrage est fermé, il est possible que le chant 31 de la feuille de verre extérieure 3 sur une (ou plusieurs) partie(s) de sa longueur, voire sur la totalité de sa longueur, soit dans la continuité du chant 51 de la feuille de verre intérieure 5, voire il est possible que le chant 31 de la feuille de verre extérieure 3 sur une (ou plusieurs) partie(s) de sa longueur, voire sur la totalité de sa longueur, s'étende plus loin, en direction centrifuge, que le chant 51 de la feuille de verre intérieure 5.

Il est possible par exemple que le chant 51 de la feuille de verre intérieure 5 soit dans la continuité du chant 31 de la feuille de verre extérieure 3 seulement là où sont les moyens pour permettre la mobilité de la vitre 2 en translation par rapport à une portière du véhicule.

En figures 1 et 2, chacun des bord 53, 54, et 55 de ladite feuille de verre intérieure 5 est ainsi situé en deçà, dans une direction centripète, du chant 31 de ladite feuille de verre extérieure 3 (et du chant 41 de la feuille de matière adhésive 4) en formant un retrait intérieur 9 unique, ou décalage centripète.

Chaque feuille 3, 4, 5 présente un pourtour P₃, P₄, P₅ périphérique : le pourtour P₅ de la feuille de verre intérieure 5 et le pourtour P₄ de la feuille de matière adhésive 4 s'étendent en deçà du pourtour P₃ de la feuille de verre extérieure 3 dans la totalité de la partie visible VP de la vitre.

Au-dessus de la limite de vision VL, la portière du véhicule peut comporter au moins une partie sans montant. Ainsi, il est possible que la portière :
- ne comporte pas de montant latéral avant et que ce soit la partie de carrosserie adjacente, autrement appelée « le pilier A » ou « A-pillar » en anglais, qui guide le vitrage, et/ou
- ne comporte pas de montant latéral arrière et que ce soit la partie de carrosserie adjacente, autrement appelée « le pilier B » ou « B-pillar » en anglais, qui guide le vitrage.

La figure 4 illustre le guidage du bord du vitrage 1, 1' dans un élément de guidage et d'étanchéité 71 fixé audit véhicule.

Plus précisément, la figure 4 illustre une vue partielle en coupe du premier bord 23 de la vitre 2, 2' et montre l'un des éléments de guidage vertical du vitrage 1, 1' qui est fixé à l'avant de la portière. L'élément de guidage comporte, notamment, un premier élément de guidage et d'étanchéité 71 permettant de guider en translation suivant l'axe Z la vitre 2, 2' et une première pièce de recouvrement 70 ayant pour fonction de cacher l'élément de guidage et d'étanchéité 71.

Le premier bord latéral 23 est en contact et glisse entre une protubérance sphérique 72 et un joint comportant deux lèvres 73, 73'. Le joint 73 peut comporter une lèvre ou plus de deux lèvres.

Un autre élément de guidage (non visible) du vitrage 1, 1' est fixé à l'arrière de la portière, permettant de guider le second bord latéral 24 de la vitre 2, 2' en translation suivant l'axe Z.

Sur cette figure 4, la feuille de verre intérieure 5 est au contact de tous les éléments d'étanchéité intérieurs de l'élément de guidage et d'étanchéité 71. Le retrait intérieur 9 présente donc une largeur conséquente, sans toutefois que cette largeur n'oblige à prévoir une étanchéité intérieure spécifique.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Vitrage (1, 1') de véhicule, comportant une vitre (2, 2') ainsi que des moyens pour permettre la mobilité de ladite vitre (2, 2') en translation verticale par rapport à une portière dudit véhicule, ladite vitre (2, 2') étant bombée et feuilletée et comprenant au moins une feuille de verre extérieure (3), une feuille de verre intérieure (5), ainsi qu'une feuille de matière adhésive (4) située entre ladite feuille de verre extérieure (3) et ladite feuille de verre intérieure (5), chaque feuille présentant un chant périphérique, le chant (51) de ladite feuille de verre intérieure (5) et le chant (41) de ladite feuille de matière adhésive (4) étant situés en-deçà du chant (31) de ladite feuille de verre extérieure (3) afin de former un retrait intérieur (9) présentant une largeur (W), ladite vitre (2, 2') présentant une ligne de vision (VL) réalisant, lorsque le vitrage est considéré verticalement, une séparation entre d'une part une partie cachée de la vitre (HP) qui est située sous ladite ligne de vision (VL) et qui est destinée à être cachée à l'intérieur de ladite portière quelle que soit la position de ladite vitre par rapport à ladite portière et d'autre part une partie visible de la vitre (VP) qui est située au-dessus de ladite ligne de vision (VL), **caractérisé en ce que** :
- le chant (51) de ladite feuille de verre intérieure (5) et le chant (41) de ladite feuille de matière adhésive (4) sont tous les deux dans le prolongement latéral du chant (31) de ladite feuille de verre extérieure (3) dans au moins une zone cachée d'alignement (HAZ1), voire dans plusieurs zones cachées d'alignement (HAZ2, HAZ3), qui est, ou qui sont chacune, située(s) dans ladite partie cachée de la vitre (HP), et
- ledit retrait intérieur (9) présente une largeur (W) comprise entre 0,8 mm et 5,0 mm, et de préférence comprise entre 1,0 mm et 4,0 mm, voire comprise entre 1,2 mm et 3,8 mm, et est présent dans la totalité de ladite partie visible de la vitre (VP).

2. Vitrage (1, 1') selon la revendication 1, dans lequel ledit retrait intérieur (9) s'étend, dans ladite partie cachée de la vitre (HP), sur une hauteur d'au moins 5,0 mm, et de préférence sur une hauteur d'au moins 10,0 mm, sous ladite ligne de vision (VL).

3. Vitrage (1, 1') selon la revendication 1 ou 2, dans lequel ledit retrait intérieur (9) est présent le long de la totalité d'un premier bord latéral (23), d'un bord haut (25) et d'un second bord latéral (24) de la vitre (2, 2').

4. Vitrage (1, 1') selon l'une quelconque des revendications 1 à 3, dans lequel ledit retrait intérieur (9) présente une largeur (W) constante le long de la partie visible d'un premier bord latéral (23) de la vitre (2, 2') et/ou le long de la partie visible d'un bord haut (25) de la vitre (2, 2') et/ou le long de la partie visible d'un second bord latéral (24) de la vitre (2, 2'), et de préférence ledit retrait intérieur (9) présente une largeur (W) constante le long de la totalité de sa longueur dans ladite partie visible de la vitre (VP).

5. Vitrage (1, 1') selon l'une quelconque des revendications 1 à 4, dans lequel ladite feuille de verre intérieure (5) présente des contraintes de surface au maximum de 20 MPa, de 30 MPa et de 40 MPa respectivement pour une épaisseur de ladite feuille de verre extérieure (3) d'environ 1,1 mm, d'environ 1,6 mm et d'environ 2,1 mm.

6. Vitrage (1, 1') selon l'une quelconque des revendications 1 à 4, dans lequel ladite feuille de verre intérieure (5) présente des contraintes de surface au minium de 200 MPa.

7. Vitrage (1) selon l'une quelconque des revendications 1 à 6, dans lequel ladite zone cachée d'alignement (HAZ1) est constituée d'un seul tenant tout le long d'un bord bas (26) de ladite vitre (2).

8. Vitrage (1') selon l'une quelconque des revendications 1 à 6, dans lequel un bord bas (26) de ladite vitre (2') comporte trois zones cachées d'alignement (HAZ1, HAZ2, HAZ3) et deux zone de fixation (F, F') non feuilletées, chaque zone de fixation (F, F') non feuilletée étant intercalée entre deux zones cachées d'alignement successives.

9. Vitrage (1, 1') selon l'une quelconque des revendications 1 à 8, dans lequel ledit retrait intérieur (9) est destiné à être guidé dans un élément de guidage et d'étanchéité (71) fixé audit véhicule.

10. Procédé de fabrication d'un vitrage (1, 1') de véhicule selon l'une quelconque des revendications 1 à 9, ledit vitrage (1, 1') comportant une vitre (2, 2') ainsi que des moyens pour permettre la mobilité de ladite vitre (2, 2') en translation verticale par rapport à une portière dudit véhicule, ladite vitre (2, 2') étant bombée et feuilletée et comprenant au moins une feuille de verre extérieure (3), une feuille de verre intérieure (5), ainsi qu'une feuille de matière adhésive (4) située entre ladite feuille de verre extérieure (3) et ladite feuille de verre intérieure (5), chaque feuille présentant un chant périphérique, le chant (51) de ladite feuille de verre intérieure (5) et le chant (41) de ladite feuille de matière adhésive (4) étant situés en-deçà du chant (31) de ladite feuille de verre extérieure (3) afin de former un retrait intérieur (9) présentant une largeur (W), ladite vitre (2, 2') présentant une ligne de vision (VL) réalisant, lorsque le vitrage est considéré verticalement, une séparation entre d'une part une partie cachée de la vitre (HP) qui est située sous ladite ligne de vision (VL) et qui est destinée à être cachée à l'intérieur de ladite portière quelle que soit la position de ladite vitre par rapport à ladite portière et d'autre part une partie visible de la vitre (VP) qui est située au-dessus de ladite ligne de vision (VL), **caractérisé en ce que** :
- pour l'opération de fabrication de ladite vitre (2, 2') par feuilletage, le chant (51) de ladite feuille de verre intérieure (5) et le chant (41) de ladite feuille de matière adhésive (4) sont tous les deux positionnés dans le prolongement latéral du chant (31) de ladite feuille de verre extérieure (3) dans au moins une zone cachée d'alignement (HAZ1), voire dans plusieurs zones cachées d'alignement (HAZ2, HAZ3), qui est, ou qui sont chacune, située(s) dans ladite partie cachée de la vitre (HP), et sont positionnés de telle sorte que
- après feuilletage, ledit retrait intérieur (9) présente une largeur (W) comprise entre 0,8 mm et 5,0 mm, et de préférence comprise entre 1,0 mm et 4,0 mm, voire comprise entre 1,2 mm et 3,8 mm, et est présent dans la totalité de ladite partie visible de la vitre (VP).

## Patentansprüche

1. Fahrzeugverglasung (1, 1'), vorweisend ein Fenster (2, 2') sowie Mittel zum Ermöglichen der Beweglichkeit des Fensters (2, 2') in vertikaler Translation relativ zu einer Tür des Fahrzeugs, wobei das Fenster (2, 2') gewölbt und laminiert ist und mindestens eine äußere Glasscheibe (3), eine innere Glasscheibe (5) sowie eine Scheibe aus Haftmaterial (4) umfasst, die sich zwischen der äußeren Glasscheibe (3) und der inneren Glasscheibe (5) befindet, wobei jede Scheibe eine Umfangskante aufweist, wobei die Kante (51) der inneren Glasscheibe (5) und die Kante (41) der Haftmaterialschicht (4) unterhalb der Kante (31) der äußeren Glasscheibe (3) gelegen sind, um eine innere Aussparung (9) auszubilden, die eine Breite (W) aufweist, wobei das Fenster (2, 2'), wenn die Verglasung vertikal betrachtet wird, eine Sichtlinie (VL) aufweist, die eine Trennung zwischen einerseits einem verborgenen Teil des Fensters (HP), der unter der Sichtlinie (VL) gelegen ist und der dafür bestimmt ist, innerhalb der Tür verborgen zu werden, unabhängig von der Position des Fensters relativ zu der Tür, und andererseits einem sichtbaren Teil des Fensters (VP) umzusetzen, der oberhalb der Sichtlinie (VL) gelegen ist, **dadurch gekennzeichnet, dass**:
- die Kante (51) der inneren Glasscheibe (5) und die Kante (41) der Haftmaterialschicht (4) beide in der seitlichen Verlängerung der Kante (31) der äußeren Glasscheibe (3) in mindestens einer verborgenen Ausrichtungszone (HAZ1) oder sogar in mehreren verborgenen Ausrichtungszonen (HAZ2, HAZ3) sind, die jeweils in dem verborgenen Teil des Fensters (HP) gelegen ist/sind, und
- die innere Aussparung (9) eine Breite (W) zwischen 0,8 mm und 5,0 mm und vorzugsweise zwischen 1,0 mm und 4,0 mm oder sogar zwischen 1,2 mm und 3,8 mm aufweist und in dem gesamten sichtbaren Teil des Fensters (VP) vorhanden ist.

2. Verglasung (1, 1') nach Anspruch 1, wobei die innere Aussparung (9) sich in dem verdeckten Teil des Fensters (HP) über eine Höhe von mindestens 5,0 mm und vorzugsweise über eine Höhe von mindestens 10,0 mm unter der Sichtlinie (VL) erstreckt.

3. Verglasung (1, 1') nach Anspruch 1 oder 2, wobei die innere Aussparung (9) entlang der gesamten ersten Seitenkante (23), einer Oberkante (25) und einer zweiten Seitenkante (24) des Fensters (2, 2') vorhanden ist.

4. Verglasung (1, 1') nach einem der Ansprüche 1 bis 3, wobei die innere Aussparung (9) entlang des sichtbaren Teils einer ersten Seitenkante (23) des Fensters (2, 2') und/oder entlang des sichtbaren Teils einer Oberkante (25) des Fensters (2, 2') und/oder entlang des sichtbaren Teils einer zweiten Seitenkante (24) des Fensters (2, 2') eine konstante Breite (W) aufweist und vorzugsweise die innere Aussparung (9) eine entlang ihrer gesamten Länge in dem sichtbaren Teil des Fensters (VP) eine konstante Breite (W) aufweist.

5. Verglasung (1, 1') nach einem der Ansprüche 1 bis 4, wobei die innere Glasscheibe (5) Oberflächenspannungen von maximal 20 MPa, 30 MPa beziehungsweise 40 MPa für eine Dicke der äußeren Glasscheibe (3) von etwa 1,1 mm, etwa 1,6 mm und etwa 2,1 mm aufweist.

6. Verglasung (1, 1') nach einem der Ansprüche 1 bis 4, wobei die innere Glasscheibe (5) minimale Oberflächenspannungen von 200 MPa aufweist.

7. Verglasung (1) nach einem der Ansprüche 1 bis 6, wobei die verborgene Ausrichtungszone (HAZ1) entlang einer Unterkante (26) des Fensters (2) einstückig gebildet ist.

8. Verglasung (1') nach einem der Ansprüche 1 bis 6, wobei eine Unterkante (26) des Fensters (2') drei verdeckte Ausrichtungszonen (HAZ1, HAZ2, HAZ3) und zwei nicht laminierte Befestigungszonen (F, F) vorweist, wobei jede nicht laminierte Befestigungszone (F, F') zwischen zwei aufeinanderfolgenden verborgenen Ausrichtungszonen eingeschoben ist.

9. Verglasung (1, 1') nach einem der Ansprüche 1 bis 8, wobei die innere Aussparung (9) dafür bestimmt ist, in einem an dem Fahrzeug befestigten Führungs- und Dichtungselement (71) geführt zu werden.

10. Verfahren zum Herstellen einer Fahrzeugverglasung (1, 1') nach einem der Ansprüche 1 bis 9, wobei die Verglasung (1, 1') ein Fenster (2, 2') sowie Mittel zum Ermöglichen der Beweglichkeit des Fensters (2, 2') in vertikaler Translation relativ zu einer Tür des Fahrzeugs vorweist, wobei das Fenster (2) , 2') gewölbt und laminiert ist und mindestens eine äußere Glasscheibe (3), eine innere Glasscheibe (5) sowie eine Scheibe aus Haftmaterial (4) umfasst, die sich zwischen der äußeren Glasscheibe (3) und der inneren Glasscheibe (5) befindet, wobei jede Scheibe eine Umfangskante aufweist, wobei die Kante (51) der inneren Glasscheibe (5) und die Kante (41) der Haftmaterialschicht (4) unterhalb der Kante (31) der äußeren Glasscheibe (3) gelegen sind, um eine innere Aussparung (9) auszubilden, die eine Breite (W) aufweist, wobei das Fenster (2, 2'), wenn die Verglasung vertikal betrachtet wird, eine Sichtlinie (VL) aufweist, die eine Trennung zwischen einerseits einem verborgenen Teil des Fensters (HP), der unter der Sichtlinie (VL) gelegen ist und der dafür bestimmt ist, innerhalb der Tür verborgen zu werden, unabhängig von der Position des Fensters relativ zu der Tür, und andererseits einem sichtbaren Teil des Fensters (VP) umzusetzen, der oberhalb der Sichtlinie (VL) gelegen ist, **dadurch gekennzeichnet, dass**:
- für den Vorgang des Herstellens des Fensters (2, 2') durch Laminieren, die Kante (51) der inneren Glasscheibe (5) und die Kante (41) der Haftmaterialschicht (4) beide in der seitlichen Verlängerung der Kante (31) der äußeren Glasscheibe (3) in mindestens einer verborgenen Ausrichtungszone (HAZ1) oder sogar in mehreren verborgenen Ausrichtungszonen (HAZ2, HAZ3) positioniert sind, die jeweils in dem verborgenen Teil des Fensters (HP) gelegen ist/sind, und so positioniert sind, dass
- nach dem Laminieren, die innere Aussparung (9) eine Breite (W) zwischen 0,8 mm und 5,0 mm und vorzugsweise zwischen 1,0 mm und 4,0 mm oder sogar zwischen 1,2 mm und 3,8 mm aufweist und in dem gesamten sichtbaren Teil des Fensters (VP) vorhanden ist.

## Claims

1. A vehicle glazed unit (1, 1'), including a glass pane (2, 2') as well as means for allowing the mobility of said glass pane (2, 2') in vertical translation relative to a door of said vehicle, said glass pane (2, 2') being curved and laminated and comprising at least one exterior glass sheet (3), an interior glass sheet (5), as well as an adhesive material sheet (4) located between said exterior glass sheet (3) and said interior glass sheet (5), each sheet having a peripheral edge, the edge (51) of said interior glass sheet (5) and the edge (41) of said adhesive material sheet (4) being located below the edge (31) of said exterior glass sheet (3) so as to form an interior offset (9) having a width (W), said glass pane (2, 2') having a line of sight (VL) creating, when the glazed unit is considered vertically, a separation between, on the one hand, a hidden part of the glass pane (HP), which is located below said line of sight (VL) and which is intended to be hidden inside said door regardless of the position of said glass pane relative to said door and, on the other hand, a visible part of the glass pane (VP), which is located above said line of sight (VL), **characterized in that:**
- the edge (51) of said interior glass sheet (5) and the edge (41) of said adhesive material sheet (4) are both in the lateral projection of the edge (31) of said exterior glass sheet (3) in at least one hidden alignment zone (HAZ1), or even in several hidden alignment zones (HAZ2, HAZ3), which is, or are each, located in said hidden part of the glass (HP), and
- said interior offset (9) has a width (W) between 0.8 mm and 5.0 mm, and preferably between 1.0 mm and 4.0 mm, or even between 1.2 mm and 3.8 mm, and is present in the entirety of said visible part of the glass pane (VP).

2. The glazed unit (1, 1') according to claim 1, wherein said interior offset (9) extends, in said hidden part of the glass (HP), over a height of at least 5.0 mm, and preferably over a height of at least 10.0 mm, below said line of sight (VL).

3. The glazed unit (1, 1') according to claim 1 or 2, wherein said interior offset (9) is present along the entirety of a first lateral rim (23), a top rim (25) and a second lateral rim (24) of the glass pane (2, 2').

4. The glazed unit (1, 1') according to any one of claims 1 to 3, wherein said interior offset (9) has a constant width (W) along the visible part of a first lateral rim (23) of the glass pane (2, 2') and/or along the visible part of an upper rim (25) of the glass pane (2, 2') and/or along the visible part of a second lateral rim (24) of the glass pane (2, 2'), and preferably said interior offset (9) has a constant width (W) along the entirety of its length in said visible part of the glass pane (VP).

5. The glazed unit (1, 1') according to any one of claims 1 to 4, wherein said interior glass sheet (5) has surface stresses of at most 20 MPa, 30 MPa and 40 MPa, respectively, for a thickness of said exterior glass sheet (3) of about 1.1 mm, about 1.6 mm and about 2.1 mm.

6. The glazed unit (1, 1') according to any one of claims 1 to 4, wherein said interior glass sheet (5) has a minimum surface stress of 200 MPa.

7. The glazed unit (1) according to any one of claims 1 to 6, wherein said hidden alignment zone (HAZ1) consists of one piece all along a bottom rim (26) of said glass pane (2).

8. The glazed unit (1') according to any one of claims 1 to 6, wherein a bottom rim (26) of said glass pane (2') includes three hidden alignment zones (HAZ1, HAZ2, HAZ3) and two non-laminated securing zones (F, F'), each non-laminated securing zone (F, F') being interposed between two successive hidden securing zones.

9. The glazed unit (1, 1') according to any one of claims 1 to 8, wherein said interior offset (9) is intended to be guided in a guiding and sealing element (71) secured to said vehicle.

10. A method for manufacturing a vehicle glazed unit (1, 1') according to any one of claims 1 to 9, said glazed unit (1, 1') including a glass pane (2, 2') as well as means for allowing the mobility of said glass pane (2, 2') in vertical translation relative to a door of said vehicle, said glass pane (2, 2') being curved and laminated and comprising at least an exterior glass sheet (3), an interior glass sheet (5), as well as an adhesive material sheet (4) located between said exterior glass sheet (3) and said interior glass sheet (5), each sheet having a peripheral edge, the edge (51) of said interior glass sheet (5) and the edge (41) of said adhesive material sheet (4) being located below the edge (31) of said exterior glass sheet (3) so as to form an interior offset (9) having a width (W), said glass pane (2, 2') having a line of sight (VL) creating, when the glazed unit is considered vertically, a separation between, on the one hand, a hidden part of the glass pane (HP), which is located below said line of sight (VL) and which is intended to be hidden inside said door regardless of the position of said glass pane relative to said door and, on the other hand, a visible part of the glass pane (VP), which is located above said line of sight (VL), **characterized in that:**
for the operation of manufacturing said glass pane (2, 2') by lamination, the edge (51) of said interior glass sheet (5) and the edge (41) of said adhesive material sheet (4) are both positioned in the lateral projection of the edge (31) of said exterior glass sheet (3) in at least one hidden alignment zone (HAZ1), or even in several hidden alignment zones (HAZ2, HAZ3), which is, or are each, located in said hidden part of the glass pane (HP), and are positioned such that
- after lamination, said interior offset (9) has a width (W) of between 0.8 mm and 5.0 mm, and preferably between 1.0 mm and 4.0 mm, or even between 1.2 mm and 3.8 mm, and is present in the entirety of said visible part of the glass pane (VP).
